Europäisches Patentamt

European Patent Office

Office européen des brevets

(19)

(11) Veröffentlichungsnummer: 0 009 717

A1

(12) EUROPÄISCHE PATENTANMELDUNG

(21) Anmeldenummer: 79103520.7

(22) Anmeldetag: 19.09.79

(51) Int. Cl.³: C 01 B 25/26
B 01 J 19/10

(30) Priorität: 28.09.78 DE 2842150

(43) Veröffentlichungstag der Anmeldung:
16.04.80 Patentblatt 80/8

(84) Benannte Vertragsstaaten:
AT BE CH DE FR GB NL

(71) Anmelder: HOECHST AKTIENGESELLSCHAFT
Zentrale Patentabteilung Postfach 80 03 20
D-6230 Frankfurt/Main 80(DE)

(72) Erfinder: Achsel, Eberhard, Dr.
Zum Gimbacher Hof 15
D-6233 Kelkheim (Taunus)(DE)

(72) Erfinder: Maurer, Alexander, Dr.
Am Grünen Weg 7
D-5030 Hürth(DE)

(72) Erfinder: Schütz, Joachim, Dr.
Kurhausstrasse 57A
D-6238 Hofheim am Taunus(DE)

(54) Verfahren zur Herstellung von feinverteiltem Zinkphosphat.

(57) Feinverteiltes neutrals Zinkphosphat, das als Korrosions-schutzpigment einsetzbar ist, läßt sich herstellen, wenn man äquivalente Mengen an Zinkoxid und Phosphorsäure in Gegenwart eines Verdünnungsmittels unter Einwirkung von Ultraschall miteinander vereinigt und reagieren läßt und man anschließend das gebildete Zinkphosphat abtrennt. Beson-ders günstig ist die Aufarbeitung des Reaktionsansatzes durch Sprühtrocknen.

EP 0 009 717 A1

HOECHST AKTIENGESELLSCHAFT   HOE 78/F 202        Dr.SP/wö

Verfahren zur Herstellung von feinverteiltem Zinkphosphat

Gegenstand der vorliegenden Anmeldung ist ein Verfahren zur Herstellung eines Zinkphosphats mit einem hohen Anteil an Feinkorn, insbesondere eines neutralen Zinkphosphats, das als Korrosionsschutzmittel einsetzbar ist.

Üblicherweise geht man bei der Darstellung eines Metallsalzes von einem Metallhydroxid oder Metalloxid und der äquivalenten Menge an Säure aus. Dabei kann man vorgelegte Säure mit Hydroxid bzw. Oxid neutralisieren; man kann auch umgekehrt das Hydroxid bzw. Oxid vorlegen und unter Zugabe von Säure neutralisieren.

Ausgehend von handelsüblichen Zinkoxid und der äquivalenten Menge an Phosphorsäure kann nach dieser Methode neutrales Zinkphosphat jedoch nicht direkt erhalten werden, da stets ein saures Reaktionsgemisch anfällt. Dies bedeutet, daß in dem Reaktionsgemisch neben nicht-umgesetztem Zinkoxid saure Zinkphosphate vorliegen, weshalb der Salzbildung eine Reinigungsstufe nachgeschaltet werden muß. So wird beispielsweise in der britischen Patentschrift 962 182 ein Verfahren zur Herstellung von neutralem Zinkphosphat angegeben, bei dem 15 %ige Phosphorsäure mit einem 20 %igen ZnO-Slurry versetzt und anschließend filtriert wird. Aus dem Filtrat kristallisiert bei $80^{o}C$ das gewünschte $Zn_3(PO_4)_2 \cdot 4\,H_2O$ aus, welches abgesaugt und mit Wasser gewaschen werden muß.

Gemäß der britischen Patentschrift 815 284 stellt man festes Zinkphosphat her, indem man eine Lösung aus Zinkphosphat in verdünnter Phosphorsäure in einem Heißluftstrom sprühtrocknet. Dieses Verfahren bietet den Vorteil, daß ein pulverförmiges, feinverteiltes Produkt erhalten wird. Dabei ist jedoch nachteilig, daß im anfallenden Zinkphosphat noch freie Säure enthalten ist.

0009717

Es bestand daher die Aufgabe ein Verfahren zur Herstellung von Zinkphosphat zu finden, bei dem direkt, d.h. ohne nachgeschaltete Reinigungsstufen, ein säurefreies, feinverteiltes Produkt anfällt.

Es wurde nun ein Verfahren zur Herstellung von feinverteiltem, säurefreiem Zinkphosphat, ausgehend von Zinkoxid und Phosphorsäure gefunden, das dadurch gekennzeichnet ist, daß man 1,5 bis 1,6 Mol Zinkoxid pro Mol Phosphorsäure in Gegenwart eines Verdünnungsmittels und unter Einwirkung von Ultraschall zusammenführt. Bevorzugt ist ein Molverhältnis $ZnO/H_3PO_4$ von 1.5 bis 1.55. Bei einem Unterschuß an ZnO fallen saure Produkte an.

Als Verdünnungsmittel sind wasserlösliche organische Lösungsmittel geeignet, die gegenüber Phosphorsäure beständig sind (z.B. Methanol oder Aceton). In diesem Fall soll der Wassergehalt in der Reaktionsmischung mindestens so hoch sein, daß sich das neutrale Zinkphosphat-Tetrahydrat bilden kann. Besonders gut eignet sich jedoch Wasser.

Die Reaktion zwischen Zinkoxid und Phosphorsäure verläuft beim erfindungsgemäßen Verfahren sehr rasch und quantitativ. Dabei ist es unerheblich, ob man in einem Reaktionsbehälter mit Rührer oder mit Umpump arbeitet; man muß lediglich dafür sorgen, daß sich suspendiertes Zinkoxid (oder gebildetes Zinkphosphat) nicht absetzt. Die Drehzahl des Rührers ist nicht kritisch. Bevorzugt sind Drehzahlen unter 2000 UpM, insbesondere unter 1000 UpM. Es ist ferner ohne Einfluß, ob man eine Suspension aus Zinkoxid in Wasser vorlegt und zu dieser Phosphorsäure hinzufügt oder ob man Phosphorsäure vorlegt und diese mit Zinkoxidsuspension neutralisiert. Das Zubereiten einer Zinkoxid-Suspension ist nicht nötig. Beispielsweise kann man Zinkoxid direkt in verdünnte Phosphorsäure eintragen um ein neutrales Salz zu erhalten.

Es ist vorteilhaft nach beendeter Zugabe der Phosphorsäure unter Einwirkung von Ultraschall weiterreagieren zu lassen bis der pH-Wert der Suspension auf mindestens 6.0 angestiegen ist. Anschließend kann das Zinkphosphat-Pigment in bekannter Weise abgetrennt und getrocknet werden.

Die spezifische Schalleistung beeinflußt natürlich die Geschwindigkeit der Umsetzung zwischen Zinkoxid und Phosphorsäure. Nach oben sind der spezifischen Schalleistung nur wirtschaftliche Grenzen gesetzt; nach unten sollen Werte von 1 kW/m$^3$ Suspension nicht unterschritten werden, da sonst für die Umsetzung immer längere Zeiten gebracht werden. Bevorzugt werden 10 kW/m$^3$ bis 50kW/m$^3$.

Gute Ergebnisse wurden mit Schallfrequenzen zwischen 10 kHz und 100 kHz erhalten.

Die Menge des Verdünnungsmittels ist innerhalb weiter Grenzen nicht kritisch. Jedoch sollte mindestens soviel Verdünnungsmittel zugegeben werden, daß der Ansatz fließfähig ist. Damit bereitet auch die Förderung des entstehenden Kristallbreis keine Schwierigkeiten. Verwendet werden können beispielsweise 0,5 bis 35 1 Verdünnungsmittel pro kg Zinkoxid, insbesondere 1 bis 7,5 1/kg.

Die eingesetzte Menge Verdünnungsmittel (z.B. Wasser) wird vorzugsweise so gewählt, daß nach beendeter Reaktion der Feststoffgehalt (gerechnet als Zinkphosphat-Tetrahydrat) des Kristallbreies 5 bis 80 g/100 ml, insbesondere 20 bis 60 g/100 ml beträgt.

Die Reaktionstemperaturen können zwischen Erstarrungspunkt und Siedepunkt des Verdünnungsmittels liegen. Das Arbeiten unter erhöhtem Druck ist möglich. Dabei können auch höhere Temperaturen gewählt werden. Bevorzugt sind Temperaturen zwischen 20 und 120$^o$C, insbesondere 40 bis 90$^o$C.

Die folgenden Beispiele dienen der weiteren Erläuterung des erfindungsgemäßen Verfahrens.

Vergleichsbeispiel

In einem 500 ml Becherglas, versehen mit Magnetrührer, Thermometer und pH-Meter werden 10 g Zinkweiß, mit einem Gehalt von 94 % ZnO, in 250 ml Wasser suspendiert und anschließend langsam innerhalb von 6 Stunden mit 77 g 9,8 %iger Phosphorsäure versetzt. Während des Versuches bleibt die Temperatur des Reaktionsgemisches bei Raumtemperatur. Am Ende der $H_3PO_4$-Dosierung hat die Suspension pH 2,8 angenommen. Es wird 90 Minuten nachgerührt, der pH-Wert ändert sich dabei nicht. Nach Absaugen des Feststoffes werden im Filtrat titrimetrisch 0,37 % $H_3PO_4$ gefunden. Daraus erreichnet sich der Zinkoxid-Umsatz zu 84 % d.Th.

Beispiel 1

In einem 500 ml Becherglas, ausgerüstet mit Magnetrührer, Thermometer, pH-Meter und einem Ultraschallstrahler - Leistung 250 Watt, Frequenz 20 kHz - werden 10 g Zinkweiß, mit einem Gehalt von 94 % ZnO, in 100 ml Wasser suspendiert. Unter der Einwirkung von Ultraschall werden dieser Suspension innerhalb von 15 Minuten 77 g 9,8 %ige Phosphorsäure zugegeben. Während der Zugabe steigt die Temperatur der Suspension von 20°C auf 32°C; am Ende der Zugabe hat sich der pH-Wert auf 6,5 eingestellt. Das erhaltene Zinkphosphattetrahydrat ist gleichmäßig kristallisiert. Die Feinheit beträgt 90 % < 25 /um.

Beispiel 2

In einem 0,2 m³ kegelförmigen Mischbehälter, ausgerüstet mit randgängigem Schneckenrührer und einem Untraschallstrahler - Leistung 1000 Watt, Frequenz 40 kHz - werden 8,4 kg Zinkweiß mit einem Gehalt von 94 % ZnO in 80 kg Wasser suspendiert. Unter Beschallung werden innerhalb von 3 Minuten 14,4 kg 42,5 %ige Phosphorsäure zugegeben, wobei sich der pH-Wert auf 4,0 einstellt. Nach weiteren 10 Minuten Reaktionszeit beträgt der pH-Wert der Suspension pH 6,6. Die Temperatur ist von 20°C auf 36°C gestiegen.

Der Feststoffgehalt der Suspension beträgt 15 %, die Feinheit des Kristallisates 90 % < 20 /um.

Beispiel 3

In einem 0,1 m$^3$ Behälter, ausgerüstet mit Umpump und Ultraschallstrahler - Leistung 1000 Watt, Frequenz 40 kHz - werden 19,2 kg 31,8 %ige Phosphorsäure vorgelegt und in diese unter Beschallung 8,4 kg Zinkweiß mit 95 % ZnO eingeschaufelt. Die Zugabe ist nach 5 Minuten beendet. Nach weiteren 10 Minuten hat sich pH 6 eingestellt. Die Temperatur ist auf 85°C gestiegen.

Der erhaltene Kristallbrei hat 54 % Feststoff, die Feinheit beträgt 90 % $<$ 30 /um. In einem Sprühturm kann das Produkt zu einem Pulver verarbeitet werden bei 170°C Lufteintrittstemperatur und 70°C Luftaustrittstemperatur.

Patentansprüche:

1. Verfahren zur Herstellung von feinverteiltem, neutralem Zinkphosphat, ausgehend von Zinkoxid und Phosphorsäure, dadurch gekennzeichnet, daß 1.5 bis 1.6 Mol Zinkoxid pro Mol Phosphorsäure in Gegenwart eines Verdünnungsmittels und unter Einwirkung von Ultraschall vereinigt werden.

2. Verfahren nach Anspruch 1, dadurch gekennzeichnet, daß Wasser als Verdünnungsmittel eingesetzt wird.

3. Verfahren nach Anspruch 1, dadurch gekennzeichnet, daß die Frequenz des Ultraschalls 10 bis 100 kHz beträgt.

4. Verfahren nach Anspruch 1, dadurch gekennzeichnet, daß die zugeführte spezifische Schalleistung 1 kW/m$^3$ bis 50 kW/m$^3$ Suspension beträgt.

5. Verfahren nach Anspruch 2, dadurch gekennzeichnet, daß die zur Verdünnung eingesetzte Wassermenge so bemessen wird, daß der Feststoffgehalt des resultierenden Kristallbreis 5 bis 80 Gew.-% beträgt.

6. Verfahren nach Anspruch 1, dadurch gekennzeichnet, daß nach beendeter Reaktion der resultierende Kristallbrei sprühgetrocknet wird.

Europäisches
Patentamt

**EUROPÄISCHER RECHERCHENBERICHT**

0009717

Nummer der Anmeldung

EP 79 103 520.7

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| | DE - C - 1 262 240 (H. PELZER)<br>* Spalte 1, Zeilen 1 bis 51 *<br><br>-- | 1-4 |
| | DE - A - 2 139 446 (INSTITUT METALL-<br>URGII IMENI A.A. BAJKOWA AKADEMII<br>NAUK SSSR)<br>* Anspruch 1; Seite 1, erster<br>Absatz *<br><br>-- | 1 |
| | CH - A - 281 747 (ULTRASCHALL AG)<br>* Seite 1, Zeilen 8 bis 30 *<br><br>-- | 1 |
| A | DE - B2 - 2 150 663 (NAUTSCHNO-<br>ISSLEDOVATELSKIJ I KONSTRUKTORSKO-<br>TECHNOLOGITSCHESKIJ INSTITUT<br>EMALIROVANNOGO CHIMITSCHESKOGO<br>OBORUDOVANIJA)<br><br>-- | |
| D | GB - A - 962 182 (S. HIGASHI et al.)<br><br>---- | |

**KLASSIFIKATION DER ANMELDUNG (Int.Cl.3)**

C 01 B  25/26
B 01 J  19/10

**RECHERCHIERTE SACHGEBIETE (Int. Cl.3)**

B 01 J  19/10
C 01 B  25/00
C 01 G  9/00
C 09 C  1/00

**KATEGORIE DER GENANNTEN DOKUMENTE**

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

X  Der vorliegende Recherchenbericht wurde für alle Patentansprüche erstellt.

| Recherchenort | Berlin | Abschlußdatum der Recherche 13-12-1979 | Prüfer | KESTEN |
|---|---|---|---|---|

EPA form 1503.1  06.78